**Europäisches Patentamt**

**European Patent Office**

**Office européen des brevets**

(11) Veröffentlichungsnummer: **0 370 347 B1**

# EUROPÄISCHE PATENTSCHRIFT

(45) Veröffentlichungstag der Patentschrift: **05.01.94**

(21) Anmeldenummer: **89120977.7**

(22) Anmeldetag: **11.11.89**

Die Akte enthält technische Angaben, die nach dem Eingang der Anmeldung eingereicht wurden und die nicht in dieser Patentschrift enthalten sind.

(51) Int. Cl.5: **C08L 25/12**, C08L 25/08, C08L 51/04, C08F 285/00, C08F 283/12

(54) **Alterungsbeständige thermoplastische Formmassen mit hoher Kerbschlagzähigkeit und Oberflächengüte.**

(30) Priorität: **24.11.88 DE 3839587**

(43) Veröffentlichungstag der Anmeldung:
**30.05.90 Patentblatt 90/22**

(45) Bekanntmachung des Hinweises auf die Patenterteilung:
**05.01.94 Patentblatt 94/01**

(84) Benannte Vertragsstaaten:
**DE ES FR GB IT NL**

(56) Entgegenhaltungen:
**EP-A- 0 260 558
EP-A- 0 260 559
DE-A- 3 617 267
DE-A- 3 720 475
DE-A- 3 720 476**

(73) Patentinhaber: **BAYER AG**

**D-51368 Leverkusen(DE)**

(72) Erfinder: **Eichenauer, Herbert, Dr.
Gustav-Heinemann-Strasse 3
D-4047 Dormagen 1(DE)**
Erfinder: **Lindner, Christian, Dr.
Im Wasserblech 11
D-5000 Köln 91(DE)**
Erfinder: **Piejko, Karl-Erwin, Dr.
Unterscheider Weg 7a
D-5060 Bergisch-Gladbach 2(DE)**
Erfinder: **Pischtschan, Alfred, Dr.
Zur Eiche 33
D-5067 Kürten(DE)**

**Beschreibung**

Die Erfindung betrifft Formmassen, enthaltend spezielle Mehrkomponentenpfropfpolymerisate auf der Basis von Silikonkautschuken; die Formmassen besitzen gegenüber ABS- oder ASA-Formmassen besondere Vorteile in der Eigenschaftskombination von Formkörperoberflächengüte, Alterungsbeständigkeit, Kerbschlagzähigkeit, insbesondere auch bei tieferen Temperaturen, und Verarbeitungssicherheit.

ABS-Formmassen (Acrylnitril-Butadien-Styrol) sind großtechnisch gefertigte, breit einsetzbare Kunststoffe, allerdings mit geringer Bewitterungsstabilität. Diesen Nachteil besitzen AAS-Polymerisate (Acrylnitril-Acrylatkautschuk-Styrol) wegen der Abwesenheit von Dienkautschuk nicht; allerdings weisen solche AAS-Formmassen nur mäßige Kerbschlagzähigkeit bei tiefen Temperaturen auf. Formmassen, die als alterungsbeständigen Kautschuk mit gutem Tieftemperaturverhalten Silikonkautschuk enthalten (vgl. DE-OS 3 629 763), besitzen nicht in allen Zusammensetzungsbereichen gute Eigenschaften und oftmals lassen Eigenschaften wie Oberflächengüte/Glanz von Kunststofformkörpern zu wünschen übrig.

Zudem sind Silikonkautschuke teuer. Es sind mehrere Versuche unternommen worden, die Eigenschaften und die Wirtschaftlichkeit der Silikon-haltigen Formmassen zu verbessern. Z.B. wurde versucht, die Silikonteilchen durch andere Kunststoffe zu füllen und Kern/Mantel-Systeme aufzubauen (vgl. DE-OS 3 720 476 oder DE-OS 3 720 475) oder den Silikonkautschuk in Acrylatkautschuk einzubetten (vgl. DE-OS 3 617 267). Zwar führt dies zu wesentlichen Verbesserungen, aber die Gesamt-Qualität, wie oben beschrieben, wurde nicht erreicht, insbesondere in Hinsicht Oberflächenbeschaffenheit, Zähigkeit im Verhältnis zur Wärmeformbeständigkeit und erforderlicher Kautschukdosierung in den Thermoplastformmassen zur Erreichung von Wirtschaftlichkeit, Formkörperhärte und Fließfähigkeit bei thermoplastischer Verarbeitung.

Es wurde nun gefunden, daß verbesserte Formmassen erhalten werden, wenn man speziell hergestellte und aufgebaute Silikonpfropfkautschuke mit Vinylharzen kombiniert.

Gegenstand der Erfindung sind thermoplastische Formmassen hoher Alterungsbeständigkeit, Kerbschlagzähigkeit und Oberflächenqualität aus

a) 20 - 80 insbesondere 40 - 70 Gew.-Teilen thermoplastischer Homo- oder Copolymerisate von Styrol, $\alpha$-Methylstyrol, Acrylnitril, Maleinsäurederivate, Methylmethacrylat oder Mischungen daraus, insbesondere aus Styrol, $\alpha$-Methylstyrol Arcrylnitril oder Mischungen daraus und

b) 80 - 20, insbesondere 60 - 30 Gew.-Teilen Pfropfprodukt aus

b1) 10 - 70, insbesondere 30 - 60 Gew.-% eines teilchenförmigen vernetzten Kautschuks mit mittleren Teilchendurchmessern ($d_{50}$) von 0,08 - 1 $\mu$m als Pfropfgrundlage und

b2) 90 - 30, insbesondere 70 - 40 Gew.-% Homo- oder Copolymerisat von Styrol, $\alpha$-Methylstyrol, Acrylnitril, Maleinsäurederivate, insbesondere Styrol, $\alpha$-Methylstyrol und Acrylnitril oder Mischungen daraus als Pfropfauflage,

die dadurch gekennzeichnet sind, daß

- der Kautschuk b1) eine Kombination aus Silikonkautschuk und Acrylatkautschuk darstellt, wobei der vernetzte Acrylatkautschuk die vernetzten Silikonkautschukteilchen umhüllt,

- das Gewichtsverhältnis von Silikonkautschuk zu Acrylatkautschuk 90 : 10 bis 50 : 50, insbesondere 70 : 30 bis 50 : 50 ist, und

- das Pfropfprodukt b) in wäßriger Emulsion durch Polymerisation der Monomeren b2) in Gegenwart einer Emulsion des Kautschuks b1) und eines Redoxinitiatorsystems hergestellt wird, vorzugsweise aus einem monomerlöslichen Hydroperoxid (wie Cumolhydroperoxid).

Thermoplastische Polymerisate a) im Sinne der Erfindung sind vorzugsweise Styrol/Methylmethacrylat/Acrylnitril-Terpolymere, Styrol- bzw. $\alpha$-Methylstyrol/Acrylnitril-Copolymere, Styrol/Acrylnitril/Acrylester-Terpolymere oder Methylmethacrylat-Homo- bzw. Copolymere, bevorzugt sind Harze auf der Basis Acrylnitril, Styrol, $\alpha$-Methylstyrol. Diese Polymerisate und ihre Herstellung sind bekannt.

Pfropfprodukte b) im Sinne der Erfindung sind teilchenförmige Pfropfprodukte aus einem Kern, der einen vernetzten Silikonkautschuk darstellt, einer ersten Hülle, die einen vernetzten Acrylatkautschuk darstellt, und einer zweiten Hülle, die ein Polymerisat oder Copolymerisat aus harzbildenden Monomeren darstellt Die zweite Hülle stellt somit die Pfropfauflage b2) dar; Kern und erste Hülle bilden zusammen die Kautschukgrundlage b1).

Das Gewichtsverhältnis des Kernes (b1.1) und der ersten Hülle (b1.2) ist 90 : 10 bis 50 : 50 und der Anteil von b2) am gesamten Pfropfprodukt 90 bis 30, bevorzugt 70 bis 40 Gew.-%. Die Pfropfpolymerisate basieren auf Kautschukteilchen b1) mit mittleren Teilchendurchmesser ($d_{50}$) von 0,08 - 1 $\mu$m, bevorzugt 0,1 - 0,8 $\mu$m.

Das Material des Kernes ist ein vernetzter Silikonkautschuk und enthält Einheiten der allgemeinen Formeln

$R_2SiO$, $RSiO_{3/2}$, $R_3SiO_{1/2}$ und $SiO_2$,

wobei R einen einwertigen organischen Rest darstellt.

Die Mengen der einzelnen Siloxaneinheiten sind dabei so bemessen, daß auf 100 Mol Einheiten der Formel $R_2SiO$ 0 - 10 Mol Einheiten der Formel $RSiO_{3/2}$, 0 - 1,5 Mol Einheiten $R_3SiO_{1/2}$ und 0 - 3 Mol Einheiten der Formel $SiO_2$ vorhanden sind.

R kann ein einwertiger gesättigter Kohlenwasserstoffrest mit 1 - 18 Kohlenstoffatomen, der Phenylrest oder ein Alkoxyl-Rest oder eine radikalisch angreifbare Gruppe wie Vinyl- oder $\gamma$-Mercaptopropyl sein. Bevorzugt sind mindestens 80 % aller Reste R Methyl, besonders bevorzugt sind Kombinationen aus Methyl und Ethyl.

Die Silikonkautschuke können eingebaute Einheiten radikalisch angreifbarer Gruppen enthalten, d.h. solche, die zur Radikaladdition oder Übertragungsreaktion befähigt sind, insbesondere Vinyl, Allyl-, Chloralkyl-, Mercaptogruppen, vorzugsweise in Mengen von 2 - 10 Mol-%, bezogen auf alle Reste R.

Die erste Hülle stellt einen vernetzten Acrylatkautschuk dar und ist insbesondere ein vernetztes Polymerisat aus Acrylsäurealkylestern, gegebenenfalls in Mischung mit bis zu 40 Gew.-% anderen Vinylmonomeren. Zu den geeigneten polymerisierbaren Acrylsäureestern gehören $C_1$-$C_8$-Alkylester, beispielsweise Methyl-, Ethyl-, Butyl-, Octyl- und 2-Ethylhexylester, Halogenalkylester, bevorzugt $C_1$-$C_8$-Halogenalkylester, wie Chlorethylacrylat, und aromatische Ester wie Benzylacrylat und Phenethylacrylat.

Sie können einzeln oder in Mischung eingesetzt werden, wobei mindestens ein Alkylester im Gemisch vorhanden sein soll Zur Vernetzung werden polyfunktionelle Monomere copolymerisiert. Beispiele sind: Ester von ungesättigten Carbonsäuren mit einen Polyol (vorzugsweise 2 - 20 Kohlenstoffatome in der Estergruppe), wie Ethylenglykoldimethacrylat, Ester einer mehrbasischen Carbonsäure mit einem ungesättigten Alkohol (vorzugsweise 8 - 30 Kohlenstoffatome im Esterrest), wie Triallylcyanurat, Triallylisocyanurat; Divinylverbindungen wie Divinylbenzol; Ester ungesättigter Carbonsäuren mit ungesättigten Alkoholen (bevorzugt 6 - 12 Kohlenstoffatome im Esterrest), wie Allylmethacrylat; Phosphorsäureester, beispielsweise Triallylphosphat und 1,3,5-Triacryloyl-hexahydro-s-triazin. Besonders bevorzugte polyfunktionelle Monomere sind Triallylcyanurat, Triallylisocyanurat, Triallylphosphat, Allylmethacrylat.

Die Menge der zur Vernetzung benutzten polyfunktionellen Monomeren ist bevorzugt 0,05 - 5,0 Gew.-% der Masse der ersten Hülle. Das Elastomer der ersten Hülle kann zusätzlich noch ein copolymerisierbares Monomeres oder mehrere solcher Monomerer vom Vinyl- oder Vinylidentyp einpolymerisiert enthalten. Beispiele sind: Methylmethacrylat, Butylacrylat, Acrylnitril, Styrol, $\alpha$-Methylstyrol, Acrylamide, Vinylalkylether. Diese Comonomere können in Mengen bis zu 40 Gew.-% des Polymerisats der ersten Hülle einpolymerisiert werden.

Die zweite Hülle b2) stellt ein pfropfpolymerisiertes Polymerisat aus harzbildenden $\alpha,\beta$-ungesättigten, radikalisch polymerisierbaren Monomeren dar aus der Reihe $\alpha$-Methylstyrol, Styrol, Acrylnitril, Methylmethacrylat, Maleinsäurederivate, insbesondere Maleinimide. Besonders bevorzugt sind Copolymerisate aus wenigstens zwei Monomeren aus der Reihe Styrol, $\alpha$-Methylstyrol, Acrylnitril.

Die Pfropfprodukte b) lassen sich wie folgt herstellen: In einer ersten Stufe wird eine Emulsion des Kernmaterials hergestellt.

Die Herstellung einer Emulsion eines langkettigen, OH-terminierten Silikonöls durch Emulsionspolymerisation ist z.B. in US-PS 2 891 910 und in GB-PS 1 024 024 beschrieben Besonders bevorzugt ist das in der britischen Patentschrift offenbarte Verfahren, eine Alkylbenzolsulfonsäure einzusetzen, da hier Emulgator und Polymerisationskatalysator in einem vorliegen. Nach erfolgter Polymerisation wird die Säure neutralisiert.

Dementsprechend kann die Emulgiermittelkonzentration gering gehalten werden. Anstelle der genannten Alkylbenzolsulfonsäuren können aber auch n-Alkylsulfonsäuren eingesetzt werden. Es ist weiterhin möglich, neben der katalytisch wirksamen Sulfonsäure auch zusätzlich andere Emulgiermittel als Co-Emulgatoren einzusetzen.

Derartige Co-Emulgatoren können nichtionischer oder anionischer Natur sein. Als anionische Co-Emulgatoren kommen insbesondere Salze der obengenannten n-Alkyl- oder Alkylbenzolsulfonsäuren in Frage. Nichtionogene Co-Emulgatoren sind Polyoxyethylenderivate von Fettalkoholen, Fettsäuren und dergleichen. Beispiele für derartige Emulgiermittel sind POE (3)-Laurylalkohol, (POE = Polyoxyethylen (x) mit x = Polymerisationsgrad), POE (20)-Oleylalkohol, POE (7)-Nonylphenol oder POE (10)-Stearat (die Schreibweise POE (3)-Laurylalkohol bedeutet, daß an ein Molekül Laurylalkohol 3 Einheiten Ethylenoxid addiert worden sind, wobei die Zahl 3 einen Mittelwert darstellt). Die übrigen Bezeichnungen sind analog.

Im allgemeinen sind solche Silikonöle, die durch Emulsionspolymerisation in Anwesenheit von nichtionogenen Co-Emulgatoren entstanden sind, von niedrigerem Molekulargewicht als solche, bei denen kein Co-Emulgator verwendet wurde. Eine Steuerung des Molekulargewichts des bei der Emulsionspolymerisation entstehenden OH-terminierten Silikonöls erfolgt z.B. weiterhin über die Temperatur bei der Gleichgewichtsbildung zwischen Siloxan, Wasser und dem durch Ringöffnung des Silikons zunächst gebildeten Silanöls (bzgl. Einzelheiten zum Zusammenhang zwischen Temperatur und Molekulargewicht wird auf D.R. Weyenberg et al., J. Polymer Sci. Part C, 27 pp 27-34 (1969) verwiesen).

Der Einbau von radikalisch angreifbaren Gruppen in das bevorzugte Silikoncopolymer kann durch Arbeiten in Anwesenheit geeigneter Siloxanoligomerer mit funktionellen Gruppen erfolgen. Geeignet sind z.B. Tetramethyltetravinylcyclotetrasiloxan oder $\gamma$-Mercaptopropylmethyldimethoxysilan oder dessen Hydrolysat.

Diese funktionellen Oligomere werden dem Basisoligomer Octamethylcyclotetrasiloxan in den gewünschten Mengen beigefügt und dann beide gemeinsam polymerisiert.

Analog kann auch der Einbau längerkettiger Alkylreste R, wie z.B. Ethyl-, Propyl- oder dergleichen bzw. der Einbau von Phenylgruppen erreicht werden.

Der Silikonkautschuk als Pfropfgrundlage muß hochvernetzt sein. Eine ausreichende Vernetzung kann jedoch schon stattfinden, wenn die bevorzugten eingesetzten Vinyl- und Mercaptopropylgruppen bei der Emulsionspolymerisation der Silikonbestandteile miteinander reagieren, so daß dann die Zugabe eines externen Vernetzers nicht erforderlich ist. Dennoch kann durchaus ein Vernetzung bewirkendes Silan zugefügt werden, um den Vernetzungsgrad des Silikonkautschukes zu erhöhen.

Verzweigungen oder Vernetzungen können durch Zugabe von z.B. Tetraethoxysilan oder eines Silans der allgemeinen Formel $RSiX_3$, wobei X eine hydrolysierbare Gruppe, insbesondere den Alkoxyrest darstellt, erzielt werden.

R hat die oben angegebene Bedeutung. Bevorzugt sind R = Methyl und R = Phenyl. Insbesondere bevorzugt sind neben Tetraethoxysilan Methyltrimethoxysilan oder Phenyltrimethoxysilan.

In der zweiten Stufe zur Herstellung des Pfropfproduktes wird in Gegenwart des Silikonkautschuklatex der ersten Stufe durch Emulsionspolymerisation der Acrylatkautschuk für die erste Hülle hergestellt, indem man die Monomeren (Hauptbestandteil wenigstens ein Acrylat) in dem Latex emulgiert und mit radikalbildenden Initiatoren polymerisiert. Der Acrylatkautschuk polymerisiert auf den Silikonkautschuk. Er muß durch Mitverwendung polyfunktioneller Monomerer bereits bei der Herstellung vernetzt werden.

Bei dieser Pfropfpolymerisation der ersten Hülle muß die Bildung neuer Teilchen möglichst vollständig unterbunden werden. Ein Emulsionsstabilisator muß in der zur Oberflächenbedeckung der Teilchen erforderlichen Menge vorhanden sein. Die Größe dieser Teilchen ist durch die Reaktionsführung in weiten Grenzen variierbar.

Nach Beendigung der Pfropfpolymerisation des Acrylatkautschuks wird auf den erhaltenen Latex ein Vinylmonomer oder ein Gemisch aus Vinylmonomeren in Emulsion polymerisiert. Dabei bilden sich die erfindungsgemäßen Pfropfpolymerisate unter Ausbildung der zweiten Hülle (b2).

Bei dieser an sich bekannten Pfropfpolymerisation arbeitet man üblicherweise in Gegenwart von Radikalinitiatoren im Temperaturbereich von ca. 50 -100° C.

Die Pfropfprodukte b) der Erfindung müssen unter Einhaltung folgender Parameter hergestellt werden: Bei Einsatz eines Zweikomponentenkautschuks b1) aus Silikon und Acrylat und Vorliegen des Silikon/Acrylat-Gewichtsverhältnisses von 90 : 10 bis 50 : 50 sowie einer Vernetzung von b1), ausgedrückt durch den Gelgehalt von b1) von größer 90 Gew.-%, bei der genannten mittleren Teilchengröße wird die Pfropfung durch ein Redoxinitiatorsystem initiiert und durchgeführt. Das Redoxsystem setzt sich zusammen aus wenigstens einem organischem Hydroperoxid (insb. Cumolhydroperoxid), einem wasserlöslichen Reduktionsmittel (insbesondere Ascorbinsäure) sowie gegebenenfalls Schwermetallsalzen. Während dieser Polymerisation wird bei Temperaturen von 50 - 100° C, insbesondere 55 - 70° C, und pH-Werten kleiner 7, insbesondere 6 - 3, gearbeitet.

Das Verfahren kann beispielsweise wie folgt durchgeführt werden:
Die wäßrige Emulsion des Kautschuks b1) wird diskontinuierlich oder kontinuierlich in wäßriger Emulsion bepfropft; bei Polymerisationstemperaturen von 50 -100° C wird die Kautschukemulsion mit den Pfropfmonomeren sowie gegebenenfalls zusätzlichem Emulgator und Hydroperoxid sowie Ascorbinsäurelösungen sowie gegebenenfalls Säure versetzt.

Dabei sind die Mengenverhältnisse und pH-Werte, wie oben beschrieben, einzuhalten. In die Polymerisation können als weitere Komponente des Startersystems katalytisch wirksame geringe Mengen Schwermetallkationen, insbesondere $Fe^{2+}$, zugefügt werden.

Hydroperoxid und Reduktionsmittel können portionsweise oder kontinuierlich in die Pfropfpolymerisation eindosiert werden. In einer Variante wird das Hydroperoxid anteilmäßig mit dem zu bepfropfenden Kautschuk im Reaktor vorgelegt; die Pfropfmonomeren sowie die restliche Ascorbinsäure, Hydroperoxid und gegebenenfalls Emulgator werden mit fortschreitender Polymerisation der Pfropfmonomeren separat in den Reaktor eingespeist. Die möglichen Metallionen werden zumeist bei der Polymerisation vorgelegt. Eine bevorzugte Variante arbeitet mit gleichzeitiger Vorlage sowohl von Eisenionen, Hydroperoxid und Ascorbinsäure; dabei wird mit Gew.-Verhältnissen von Hydroperoxid/Ascorbinsäure von 10 : 1 bis 2 :1 gearbeitet, insbesondere von 6 : 1 bis 3 : 1.

Die Mengen Hydroperoxid und Ascorbinsäure sind kritisch. Bei Überdosierung von Hydroperoxid und/oder Ascorbinsäure wird die Pfropfpolymerisation beeinträchtigt. Die Pfropfausbeute geht zurück; das Molekulargewicht des gepfropften und des freien Harzes wird geringer; Unter oder Überschreitung der Mengen an Hydroperoxid und Ascorbinsäure kann sich außerdem empfindlich auf Monomerumsatz und Emulsionstabilität auswirken, so daß die technische Realisierung der Pfropfpolymerisation unmöglich wird.

Bei der Pfropfpolymerisation bis zu Monomerumsätzen von > 98 Gew.-% fallen lagerstabile Pfropfpolymeremulsionen mit Polymerisatgehalten von 25 bis 50 Gew.-% an; das Pfropfpolymerisat selbst läßt sich gut aus den Emulsionen durch bekannte Koagulations-Verfahren (z.B. durch Säuren oder Salze) isolieren.

Will man die Pfropfpolymerisate mit thermoplastischen Harzen kombinieren, die selbst als Emulsion vorliegen, so kann man die Pfropfpolymerisatemulsion mit der Harzemulsion mischen und gemeinsam koagulieren.

Die Pfropfpolymerisate selbst können nach bekannten Verfahren aufgearbeitet werden, z.B. durch Koagulation der Latices mit Elektrolyten (Salze, Säuren oder Gemische davon) und anschließende Reinigung und Trocknung.

Die erfindungsgemäßen Thermoplastformmassen zeichnen sich durch die Kombination guter technologischer und anwendungstechnischer Eigenschaften aus; nämlich die Relation von Wärmestandfestigkeit und Kerbschlagfestigkeit; Kerbschlagzähigkeit auch bei tiefen Temperaturen, hohe Fließfähigkeit bei thermoplastischer Verarbeitung, Bewitterungsstabilität, Thermostabilität, insbesondere während der Verarbeitung; störungsfreie Oberflächen mit hohem Glanz der hergestellten Formkörper.

Die erfindungsgemäßen Formmassen können Farbstoffe und Pigmente, Stabilisatoren gegen Licht- und Wärmeeinwirkung, Weichmacher, Schaummittel und organische oder anorganische Füllstoffe in Körnchen-, Pulver- oder Faserform enthalten.

Sie können beispielsweise durch Spritzguß oder durch Strangpressen verformt werden und sind für Formkörper jeder Art geeignet, die witterungsbeständig und schlagfest sein müssen. Beispielsweise können sie als Außenschicht eines Laminats aus mehreren verschiedenen Polymeren dienen.

Beispiele

I. Pfropfpolymerisat im Sinne der Erfindung

1) Herstellung einer Silikonemulsion

38,4 Gew.-Teile Octamethylcyclotetrasiloxan, 1,3 Gew.-Teile Tetramethyltetravinylcyclotetrasiloxan und 0,25 Gew.-Teile Tetraethoxysilan werden miteinander verrührt.

0,6 Gew.-Teile Dodecylbenzolsulfonsäure werden zugeführt, anschließend 70 Gew.-Teile Wasser innerhalb 1 Stunde zugegeben. Dabei wird intensiv gerührt. Die Voremulsion wird mit Hilfe einer Hochdruckemulgiermaschine 2 x bei 200 bar homogenisiert. Man gibt weiter 0,5 Gew.-Teile Dodecylbenzolsulfonsäure hinzu. die Emulsion wird 2 Stunden bei 85° C und anschließend 36 Stunden bei Zimmertemperatur gerührt. Neutralisiert wird mit Hilfe von 5 n-NaOH. Es resultiert eine stabile Emulsion mit einem Feststoffgehalt von ca. 37 %. Das Polymer besitzt einen Gelgehalt von 89 Gew.-%, gemessen in Toluol.

2) Herstellung einer Emulsion eines Silikon/Acrylatkautschuksystems

In einem Reaktor werden 1042 Gew.-Teile der Emulsion I.1) und 84 Gew-Teile Wasser vorgegeben und unter Rühren auf 70° C aufgeheizt. Anschließend fügt man eine Lösung aus 1 Gew.-Teil Kaliumperoxidisulfat in 32 Gew.-Teilen Wasser hinzu. Danach werden folgende zwei Lösungen innerhalb von 5 Stunden bei 70° C gleichförmig zudosiert:

| Lösung 1: | n-Butylacrylat | 167,8 Gew.-Teile |
| | Triallylcyanurat | 1,6 Gew.-Teile |
| Lösung 2: | Wasser Na-Salz von $C_{14}$-$C_{18}$-Alkylsulfonsäuren | 214 Gew.-Teile |
| | | 3,2 Gew.-Teile |

Anschließend wird innerhalb von 4 Stunden bei 70 °C auspolymerisiert.

Der resultierende Latex besitzt einen Feststoffgehalt von 37 Gew.-%, einen pH-Wert von 3,86, eine mittlere Teilchengröße ($d_{50}$) von 200 nm, das Polymer besitzt einen Gelgehalt von 93 Gew.-%.

3) Herstellung des Pfropfpolymerisats im Sinne der Erfindung

In einem Reaktor werden vorgelegt:
3943 Gew.-Teile der Emulsion I.2) und
1317 Gew.-Teile Wasser
Nach Aufheizen auf 60 °C startet man durch Zugabe folgender Lösungen:

| Lösung 1: | Wasser | 100 Gew.-Teile |
| | Na-Salz von $C_{14}$-$C_{18}$-Alkylsulfonsäuren | 3 Gew.-Teile |
| | Cumolhydroperoxid | 3,5 Gew.-Teile |
| Lösung 2: | Wasser | 40 Gew.-Teile |
| | Ascorbinsäure | 1 Gew.-Teil |
| | Fe(II)SO$_4$-Lösung in Wasser (0,1 %ig) | 2,5 Gew.-Teile |

Danach werden folgende Lösungen bei 60° C (innerhalb 4 Stunden) in den Reaktor eindosiert:

| Z1: | Styrol | 1040 Gew.-Teile |
| | Acrylnitril | 404 Gew.-Teile |
| Z2: | Wasser | 900 Gew.-Teile |
| | Na-Salz von $C_{14}$-$C_{18}$-Alkylsulfonsäuren | 25 Gew.-Teile |

Anschließend wird innerhalb von 5 Stunden bei 60° C auspolymerisiert. Der resultierende Latex besitzt einen Feststoffgehalt von 36,5 Gew.-%.

Zur Isolierung des Pfropfpolymerisats in Pulverform wird der Latex bei 70 - 90° C mittels wäßriger MgSO$_4$-Lösung koaguliert, filtriert und mit Wasser elektrolytfrei gewaschen.

II. Vergleichspfropfpolymerisate

1) Ein ABS-Pfropfpolymerisat aus 50 Gew.-% grobteiligem, hochvernetztem Polybutadien und 50 Gew.-% SAN-Polymerisat mit einem Styrol/Acrylnitril-Gew.-Verhältnis von 72 : 28. Mittlere Teilchengröße ($d_{50}$): 400 nm.
2) Ein ASA-Pfropfpolymerisat aus 50 Gew.-% grobteiligem, hochvernetztem Acrylatkautschuk und 50 Gew.-% SAN (derselben Zusammensetzung wie bei II.1). Mittlere Teilchengröße ($d_{50}$) 420 nm. Das Produkt wurde hergestellt analog EP 34748.
3) In einem Reaktor wird vorgelegt:
3943 Gew.-Teile der Emulsion I.2)
und
1317 Gew.-Teile Wasser
Nach Aufheizen auf 70° C wird gestartet durch Zugabe einer Lösung von 6 Gew.-Teilen Kaliumperoxidisulfat in 100 Gew.-Teilen Wasser. Anschließend werden folgende Lösungen in den Reaktor bei 70° C innerhalb von 4 Stunden eingespeist.

| Lösung 1: | Styrol | 1040 Gew.-Teile |
| | Acrylnitril | 404 Gew.-Teile |
| Lösung 2: | Wasser | 900 Gew.-Teile |
| | Na-Salz von $C_{14}$-$C_{18}$-Alkylsulfonsäuren | 25 Gew.-Teile |

Danach wird in 5 Stunden bei 70° C auspolymerisiert. Der Latex besitzt einen Feststoffgehalt von 36,6 Gew.-%. Die Isolierung der Polymerisate erfolgt gemäß I.3).

6

4) Herstellung einer Emulsion eines Silikon/Acrylatkautschuksystems außerhalb des erfindungsgemäßen Bereichs

In einem Reaktor werden vorgelegt: 458 Gew.-Teile der Emulsion I.1) und 220 Gew.-Teile Wasser. Unter Rühren wird auf 70° C aufgeheizt. Anschließend fügt man eine Lösung aus 2 Gew.-Teilen Kaliumperoxidisulfat in 50 Gew.-Teilen Wasser hinzu. Danach werden folgende zwei Lösungen innerhalb von 5 Stunden bei 70° C gleichmäßig zudosiert:

| Lösung 1: | n-Butylacrylat | 385,5 Gew.-Teile |
| | Triallylcyanurat | 3,6 Gew.-Teile |
| Lösung 2: | Wasser | 400 Gew.-Teile |
| | Na-Salz von $C_{14}$-$C_{18}$-Alkylsulfonsäuren | 6 Gew.-Teile |

Anschließend wird in 4 Stunden bei 70° C auspolymerisiert.

Herstellung eines Pfropfpolymerisats außerhalb des erfindungsgemäßen Bereichs

Analog der Vorschrift I.3) wird polymerisiert, mit der Änderung:
In den Reaktor werden vorgelegt
3943 Gew.-Teile der Emulsion der ersten Stufe II.4)
und
1317 Gew.-Teile Wasser
Die Isolierung des Pfropfpolymerisats erfolgt analog I.3)

5) In einem Reaktor werden vorgelegt:

3940 Gew.-Teile der Emulsion I.1)
1317 Gew.-Teile Wasser
Nach Aufheizen auf 70° C startet man durch Zugabe von 6 Gew.-Teilen Kaliumperoxidisulfat in 100 Gew.-Teilen Wasser. Danach werden folgende Zuläufe in den Reaktor innerhalb von 4 Stunden bei 70° C eingespeist:

| Z1: | Styrol | 1040 Gew.-Teile |
| | Acrylnitril | 404 Gew.-Teile |
| Z2: | Wasser | 900 Gew.-Teile |
| | Na-Salz von $C_{14}$-$C_{18}$-Alkylsulfonsäuren | 25 Gew.-Teile |

Danach wird innerhalb von 4 Stunden bei 70°C auspolymerisiert. Die Isolierung des Polymerisates erfolgt analog I.3).

Die in Tabelle 1 angegebenen Mengen (Gew.-Teile) der vorstehend beschriebenen Komponenten wurden zusammen mit jeweils 0,1 Gew.-Teilen eines Silikonöls und 2 Gew.-Teilen Pentaerythrittetrastearat auf einem 1,3 l-Innenkneter bei Temperaturen zwischen 160° und 200°C vermischt, wonach durch Verarbeitung auf einer Spritzgußmaschine bei 240°C Formkörper hergestellt wurden.

Schlagzähigkeit und Kerbschlagzähigkeit wurden nach ISO 179 (Einheit: kJ/m[2]) ermittelt, die Bestimmung der Härte (Einheit: N/mm[2]) erfolgte nach ISO/DIS 2039, die Wärmeformbeständigkeit (Vicat B, Einheit: °C) wurde nach ISO 306 gemessen. Die Beurteilung der Oberflächenqualität erfolgte visuell an ebenen Plättchen der Maße 4 cm x 6 cm.

Als Harzkomponente wurde ein Styrol/Acrylnitril = 72 : 28-Copolymerisat mit einem mittleren $\overline{M}_w$ von ca. 115 000 und einem $\overline{M}_w/\overline{M}_n$-1 ≦ 2,0 eingesetzt.

| Versuch | Harz-komponente (Gew.-Teile) | Pfropf-polymerisat (Gew.-Teile) | Schlagzähigkeit [kJ/m²] RT | - 40°C | Kerbschlagzähigkeit [kJ/m²] RT | - 40°C | Härte [N/mm²] | Vicat B [°C] | Oberfläche |
|---|---|---|---|---|---|---|---|---|---|
| 1 | SAN (70) | I.3 (30) | ng | 70 | 16 | 10 | 110 | 102 | + |
| 2 | " (60) | I.3 (40) | ng | 100 | 21 | 12 | 92 | 98 | + |
| 3 | " (50) | I.3 (50) | ng | 140 | 25 | 15 | 80 | 98 | + |
| 4 (Vergl.) | " (60) | II.1 (40) | ng | 120 | 26 | 14 | 87 | 97 | + |
| 5 (Vergl.) | " (60) | II.2 (40) | ng | 60 | 14 | 7 | 90 | 96 | + |
| 6 (Vergl.) | " (60) | II.3 (40) | 116 | 77 | 14 | 9 | 94 | 99 | - |
| 7 (Vergl.) | " (60) | II.4 (40) | 120 | 65 | 13 | 6 | 93 | 98 | + |
| 8 (Vergl.) | " (60) | II.5 (40) | ng | 100 | 17 | 7 | 88 | 94 | - |

ng = nicht gebrochen

**Patentansprüche**

1.  Thermoplastische Formmassen aus

8

a) 20 - 80 Gew.-Teilen thermoplastischer Homo- oder Copolymerisate von Monomeren von Styrol, $\alpha$-Methylstyrol, Acrylnitril, Maleinsäurederivate, Methylmethacrylat oder Mischungen daraus und

b) 80 - 20 Gew.-Teilen Pfropfprodukt aus

b1) 10 - 70 Gew.-% eines teilchenförmigen vernetzten Kautschuks mit mittlerem Teilchendurchmesser ($d_{50}$) von 0,08 bis 1 $\mu$m als Pfropfgrundlage und

b2) 90 - 30 Gew.-% Homo- oder Copolymerisat von Styrol, $\alpha$-Methylstyrol, Acrylnitril, Maleinsäurederivate, Methylmethacrylat oder Mischungen daraus als Pfropfauflage

dadurch gekennzeichnet, daß

- der Kautschuk b1) eine Kombination aus Silikonkautschuk und Acrylatkautschuk darstellt, wobei der vernetzte Acrylatkautschuk die vernetzten Silikonkautschukteilchen umhüllt,
- das Gew.-Verhältnis von Silikonkautschuk zu Acrylatkautschuk 90 : 10 bis 50 : 50 ist, und
- das Pfropfprodukt b) in wäßriger Emulsion durch Polymerisation der Monomeren b2) in Gegenwart einer Emulsion des Kautschuks b1) und eines Redoxinitiatorsystems hergestellt wird.

## Claims

**1.** Thermoplastic moulding compounds of

a) from 20 - 80 parts by weight of thermoplastic homo- or copolymers of monomers of styrene, $\alpha$-methylstyrene, acrylonitrile, maleic acid derivatives, methyl methacrylate or mixtures thereof and

b) from 80 - 20 parts by weight of a graft product of

b1) from 10 - 70% by weight of a particulate cross-linked rubber having an average particle diameter ($d_{50}$) of from 0.08 to 1 $\mu$m as the graft basis and

b2) from 90 to 30% by weight of a homo- or copolymer of styrene, $\alpha$-methylstyrene, acrylonitrile, maleic acid derivatives, methyl methacrylate or mixtures thereof as graft,

characterised in that

the rubber b1) is a combination of silicone rubber and acrylate rubber, the cross-linked acrylate rubber enclosing the cross-linked silicone rubber particles,

the ratio by weight of silicone rubber to acrylate rubber is from 90 : 10 to 50 : 50 and the graft product b) is prepared in aqueous emulsion by polymerisation of the monomers b2) in the presence of an emulsion of the rubber b1) and a redox initiator system.

## Revendications

**1.** Compositions à mouler thermoplastiques constituées de

a) 20 à 80 parties en poids d'homopolymères ou de copolymères thermoplastiques de monomères de styrène, $\alpha$-méthylstyrène, acrylonitrile, dérivés d'acide maléique, méthacrylate de méthyle ou de mélanges de ces monomères et

b) 80 à 20 parties en poids d'un produit de greffage

b1) de 10 à 70 % en poids d'un caoutchouc réticulé en particules ayant un diamètre moyen ($d_{50}$) de 0,08 à 1 $\mu$m comme substrat de greffage et

b2) de 90 à 30 % en poids d'homopolymère ou de copolymère de styrène, d'$\alpha$-méthylstyrène, d'acrylonitrile, de dérivés d'acide maléique, de méthacrylate de méthyle ou de leurs mélanges comme greffon

caractérisées en ce que

- le caoutchouc b1) constitue une association d'un caoutchouc de silicone et d'un caoutchouc d'acrylate, le caoutchouc d'acrylate réticulé enveloppant les particules réticulées de caoutchouc de silicone,
- le rapport en poids du caoutchouc de silicone au caoutchouc d'acrylate a une valeur de 90:10 à 50:50 et
- le produit de greffage b) est préparé en émulsion aqueuse par polymérisation des monomères b2) en présence d'une émulsion du caoutchouc b1) et d'un système initiateur d'oxydo-réduction.